# EUROPÄISCHE PATENTANMELDUNG

(11) **EP 0 533 094 A1**
(43) Veröffentlichungstag der Anmeldung: **24.03.1993**
(21) Anmeldenummer: 92115714.5
(22) Anmeldetag: 14.09.1992
(51) Int. Cl.: C03C 17/00, C03C 17/32

(54) **Verfahren, Überzugsmittel und Vorrichtung zur Herstellung von beschichteten Glashohlkörpern**

(30) Priorität: 14.09.1991 DE 4130682
(71) Anmelder: Herberts Gesellschaft mit beschränkter Haftung, D-42285 Wuppertal (DE); GERRESHEIMER GLAS Aktiengesellschaft, W-4000 Düsseldorf 30 (DE); FIRMA HERMANN HEYE, D-31682 Obernkirchen (DE)
(72) Erfinder: Schubert, Bernd, Dr., W-5600 Wuppertal 22 (DE); Ferner, Uwe, Dr., W-5209 St. Augustin (DE); Bauerett, Georg, W-5044 Kerpen 8 (DE); Kinzel, Wolfgang, W-4040 Neuss 1 (DE); Hetmann, Hermann, W-6500 Mainz (DE); Meyer, Henning, Dr., W-3062 Bückeburg (DE)
(74) Vertreter: Türk, Gille, Hrabal, Leifert

(57) **Zusammenfassung**

Verfahren zur Herstellung von beschichteten Glashohlkörpern, durch Auftrag eines radikalisch polymerisierbaren Überzugsmittels und anschließende Härtung des gebildeten Überzugs mit energiereicher Strahlung, dadurch gekennzeichnet, daß es on-line durchgeführt wird, wobei die aus einer Glasschmelze erstellten Glashohlkörper einer Kaltendvergütung unterzogen, sortiert und unmittelbar anschließend mit einem lösungsmittelfreien, radikalisch und/oder kationisch polymerisierbaren Überzugsmittel in einer Schichtdicke von mindestens 8 µm beschichtet werden, worauf der gebildete Überzug durch energiereiche Strahlung gehärtet und anschließend mit Luft angeblasen wird.

Das Verfahren ist anwendbar bei der Herstellung von oberflächengeschützten und dekorativen Flaschen.

## Beschreibung

Die Erfindung betrifft die Herstellung von beschichteten Glashohlkörpern, insbesondere einseitig offenen Glashohlkörpern, wie Glasbehälter und Glasflaschen, durch Auftrag eines radikalisch und/oder kationisch polymerisierbaren Überzugsmittels und anschließende Härtung des gebildeten Überzugs mittels energiereicher Strahlung.

Bei der Herstellung von Glasflaschen oder Glasbehältern fällt ein Teil der hergestellten Objekte mit Beschädigungen und Schwachstellen an, die die üblicherweise geforderte Mindest-Innendruckfestigkeit von 16 - 18 bar nicht aufweisen. Bei stark kohlendioxidhaltigen Getränken, wie beispielsweise Sekt, können Glasflaschen leicht über diese Mindestdruckgrenze hinaus beansprucht werden, so daß sie bei Nichterfüllung der Mindestanforderung bei geringster Beanspruchung leicht platzen können. Da trotz Stichprobenkontrolle nicht ganz ausgeschlossen werden kann, daß derartige Objekte die Produktion unbeanstandet verlassen, ergibt sich ein entsprechendes Bruchpotential beim Abfüllen von Getränken unter Druck (z. B. Sekt) in den Abfüllbetrieben. Die größte Gefährdung geht jedoch von einem geringen Prozentsatz von Glasflaschen aus, der knapp über der Mindest-Druckfestigkeit unbeanstandet trotz vorheriger Selektierung in den Handel gelangt und dort durch extreme Beanspruchung der Glasflaschen schnell unterhalb die Mindest-Druckfestigkeit gerät.

In der Regel weisen stark druckbeanspruchte Flaschen, wie z. B. 0,75 l-Sektflaschen, als Mittelwert eine Innendruckfestigkeit von etwa 20 - 30 bar auf. Obwohl Glas einer der härtesten und sprödesten Werkstoffe ist, ist seine Oberfläche generell verletzungsanfällig. Verletzungen treten im Handel oder beim Verbraucher, bei der Lagerung oder bei der Handhabung auf, wobei durch mechanische Beschädigung, beispielsweise durch Sandkörner, die Oberfläche von Glasflaschen mit Rissen oder Kratzern beschädigt werden kann. Derartige in der Praxis auftretende Beschädigungen lassen sich mit einem sogenannten Single-Liner-Test simulieren, bei dem mehrere Flaschen befüllt mit ihrem Eigengewicht über einen bestimmten Zeitraum sich drehend aneinander reiben. Hierbei können die heutzutage mit den üblichen bei der Flaschenherstellung verwendeten Kaltendvergütungsmitteln, wie z. B. Polyethylen-Dispersionen, Tenside, Wachse usw. beschichteten Flaschen sehr leicht eine entsprechende Oberflächenbeschädigung davontragen, so daß deren Innendruckstabilität auf Werte unter die Mindestanforderungen fallen.

Derartig beschädigte Flaschen stellen das größte Gefährdungspotential für den Verbraucher dar. Um Schädigungen dieser Art weitgehend zu eliminieren, werden seitens der Glashersteller z. B. Sektflaschen aus Sicherheitsgründen mit entsprechender Wanddicke hergestellt, wodurch ein höheres Gewicht der Flaschen in Kauf genommen wird, um ein Minimum an Beschädigungsrisiko einzugehen.

Zunehmend werden heutzutage, einerseits vom Verbraucher, andererseits von der Marketingseite der Verkäufer her, dekorative Anforderungen an Glasflaschen und Glasbehälter gestellt. In vielen Bereichen fordern Abfüllbetriebe als unverkennbares Markenzeichen einen bestimmten Farbton der Glasflaschen oder Glasbehälter, mit denen sie ihre Produkte dem Markt anbieten. Üblicherweise werden Glasflaschen bei der Glasschmelze im Bereich des sogenannten Feeders mit Sondertönen eingefärbt. Hierbei lassen sich im Gegensatz zu den üblichen Braun- und Grüntönen im beschränkten Maße spezielle dunkle bis helle Braun- und Grüntöne, teilweise auch Blautöne, herstellen. Andere Farbtöne, wie beispielsweise Gelb- bis Orangetöne, die bei Glühbirnen üblich sind, lassen sich bei Glasflaschen nicht herstellen, da derartige Einfärbungen teilweise mit hochgiftigen Salzen, wie Cadmiumsalzen, erzielt werden. Auch ist die Einfärbung von Glas mit anderen Farbtönen, wie z. B. tief-dunkelblau oder rot ebenfalls nur mit toxikologisch bedenklichen Schwermetallsalzen (Kobalt) oder sehr kostspieligen Zusätzen (Gold) zu erzielen.

In der Literatur werden daher Schutzüberzüge und dekorative Überzüge für Glasbehälter, wie Glasflaschen, beschrieben und in der Praxis angewandt; Ein Beispiel für eine dekorative Anwendung ist das sogenannte Plasti-Shield-Verfahren, bei dem eine Folie aus Polyvinylchlorid oder Polystyrol um Flaschen geschrumpft wird. Es wurde auch beschrieben Glasflaschen mit Kunststoffbeschichtungen zu versehen, wobei auch das Bedürfnis beschrieben wurde, derartige Kunststoffbeschichtungen On-line unmittelbar nach der Herstellung der Glasflaschen aufzubringen. In den internationalen Patentanmeldungen WO 90/05031 und WO 90/05088 wird die Herstellung von transparenten Beschichtungen auf Glasbehältern beschrieben, die einen hohen Glanz und Abriebfestigkeit ergeben sollen. Vor dem Aufbringen der transparenten Überzüge können auf den Glasbehältern Beschriftungen und Etiketten angebracht werden, die durch die Überzüge geschützt werden. Als Überzugsmittel werden lösemittelhaltige durch Ultraviolettstrahlung härtbare Lacke auf Acrylbasis verwendet. Diese Lacke werden aufgesprüht, worauf das Lösungsmittel abgedampft und der verbleibende Überzug durch Ultraviolettlicht gehärtet wird.

Die bekannten Verfahren zur Herstellung eines Kratz- oder Splitterschutzes bzw. zur Herstellung einer dekorativen Oberfläche konnten bisher nur im Off-line-Betrieb durchgeführt werden. Eine On-line-Produktion konnte sich in der Praxis nicht durchsetzen. Die On-line-Produktion beinhaltet die Herstellung einer hohen Stückzahl von Flaschen, beispielsweise 200 bis 300 Flaschen/Min., d.h. von etwa 3 bis 5 Flaschen/Sek. Bisher stand keine praktisch verwertbare Technologie zur Verfügung, die es ermöglichte, bei derart hohen Taktgeschwindigkeiten Glashohlkörper, wie Glasflaschen oder Glasbehälter, On-line mit organischen Überzügen zu versehen, um einen Glas/Kunststoff-Verbundwerkstoff zu erstellen.

Aufgabe der Erfindung ist daher die Bereitstellung eines Verfahrens zur Herstellung von beschichteten Glashohlkörpern, wie Glasflaschen und Glasbehältern, das apparativ und räumlich an die geläufigen Herstellungsverfahren für Glashohlkörper angepaßt werden kann und bei hohen Produktionsgeschwindigkeiten zu Glashohlkörpern mit mechanisch und chemisch stabiler, dekorativer und geruchfreier Oberfläche führt.

Es hat sich gezeigt, daß diese Aufgabe durch ein Verfahren gelöst werden kann, das einen Gegenstand der Erfindung darstellt, bei dem On-line bzw. in Reihe nacheinander die aus einer Glasschmelze erstellten Glashohlkörper einer Kaltendvergütung unterzogen, sortiert und unmittelbar anschließend mit einem lösungsmittelfreien, radikalisch und/oder kationisch polymerisierbaren Überzugsmittel in einer Schichtdicke von mindestens 8 µm, bevorzugt mindestens 10 µm beschichtet werden, worauf der gebildete Überzug durch energiereiche Strahlung gehärtet und anschließend mit Luft angeblasen wird.

Das erfindungsgemäße Beschichtungsverfahren kann im Anschluß an die in üblicher Weise erfolgte Herstellung von Glashohlkörpern, wie Glasflaschen und Glasbehälter, durchgeführt werden. Die Glashohlkörper werden, in dem Fachmann geläufiger Weise aus einer Glasschmelze erstellt, gegebenenfalls mit einer Heißendvergütung versehen, abgekühlt und anschließend einer Kaltendvergütung unterzogen.

Die Heißendvergütung kann in üblicher Weise nach der Flaschenherstellung durchgeführt werden, beispielsweise durch Behandlung mit Titanverbindungen, wie Titantetrachlorid oder Zinnverbindungen, wie Zinnorganylverbindungen oder Zinntetrachlorid. Die Heißendvergütung wird zur Behebung von Mikrorissen durchgeführt, die im Bereich der Formgebung entstehen können.

Im Anschluß an die mögliche Heißendvergütung werden die Glashohlkörper im allgemeinen einem Abkühlofen zugeführt, worauf eine sogenannte Kaltendvergütung aufgebracht wird.

Die Kaltendvergütung dient im allgemeinen als Gleitschutz für die nunmehr der Sortierlinie zur physikalischen Güteprüfung und Stichproben-Qualitätskontrolle zugeführten Glashohlkörper. Als Gleitschutzmittel wurden beispielsweise Polyethylendispersionen oder Tenside verwendet, die eine starke Reibung der Glashohlkörper aneinander und damit eine äußere Verletzungsmöglichkeit vermeiden sollen.

In der Praxis erfolgt im Anschluß an die Sortierlinie eine Palettierung bzw. Verpackung der Glashohlkörper, die dann unmittelbar dem Versand zugeführt werden können.

Erfindungsgemäß erfolgt im Anschluß an die Sortierlinie eine On-line-Beschichtung mit anschließendem Anblasen mit Luft, worauf gegebenenfalls eine weitere Kontrolle des Aussehens der Beschichtung (Glanz, Verlauf usw.), der Härte, der Schichtdicke, des Geruch und anderer Eigenschaften der erstellten Hohlglaskörper erfolgt, die anschließend palettiert und zum Versand bereit gemacht werden können.

Gemäß einer bevorzugten Ausführungsform der Erfindung wird die Kaltendvergütung durch Aufbringen von Polyalkylenglykol-Fettsäureestern, wobei die Alkylengruppen bevorzugt 2 bis 4 Kohlenstoffatome aufweisen, durchgeführt. Die den Estern zugrundeliegenden Fettsäuren sind bevorzugt höhere Fettsäuren mit beispielsweise 7 bis 22 Kohlenstoffatomen, wie Caprinsäure, Caprylsäure, Laurinsäure, Myristinsäure, Behensäure, Arachinsäure und, aus Kostengründen bevorzugt, Palmitinsäure und Stearinsäure, wobei derartige Säuren im allgemeinen im Gemisch vorliegen. Derartige Ester sind im Handel erhältlich. Brauchbare Handelsprodukte sind beispielsweise Polyethylenglykol-Fettsäureester eines Gemischs der vorstehend als Beispiele aufgeführten Fettsäuren, wobei beispielsweise der Gehalt an Palmitinsäure etwa 40 bis 55 Gew.% und der an Stearinsäure ebenfalls etwa 40 bis 55 Gew.% (bezogen auf den Fettsäureanteil) beträgt.

Gemäß einer bevorzugten Ausführungsform kann das erfindungsgemäß bevorzugt eingesetzte Kaltendvergütungsmittel auf der Basis der vorstehend beschriebenen Fettsäureester durch Zusatz von Silanen, insbesondere von einem oder mehreren Alkoxysilanen, modifiziert werden. Derartige Silane weisen bevorzugt Glycidylgruppen auf; Beispiele sind γ-Glycidyloxipropyltrimethoxysilan und γ-Glycidyloxipropyl-triethoxysilan. Das Mengenverhältnis Fettsäureester/Silan kann von 100 : 10 bis 100 : 1, bezogen auf das Festkörpergewicht des modifizierten Kaltendvergütungsmittels, variieren.

Das Kaltendvergütungsmittel wird im allgemeinen in wäßriger Lösung beispielsweise mit einem Festkörpergehalt von 1 bis 10 Gew.%, bevorzugt 2 bis 5 Gew.%, in den in Glashütten üblichen Anlagen auf die erhaltenen Glashohlkörper aufgesprüht. Diese weisen im allgemeinen Temperaturen von 110 bis 130^{o}C auf, so daß das Wasser verdampft und auf den Oberflächen der Glashohlkörper ein Film aus den Fettsäureestern als temporärer Gleitschutz verbleibt.

Überraschenderweise hat es sich erfindungsgemäß gezeigt, daß dieser Fettsäureesterfilm, der gegebenenfalls Silane enthält, als Haftungsverbesserer zwischen dem Glassubstrat und dem später aufzubringenden durch energiereiche Strahlung härtbaren Überzug dienen kann und zudem zur Verbesserung der Wasserfestigkeit beiträgt (letzteres insbesondere bei Zusatz der Silane).

Im Anschluß an die Kaltendvergütung können die erstellten Glashohlkörper beim erfindungsgemäßen Verfahren einer üblichen Sortierung unterzogen werden, wobei der Fettsäureesterfilm als Gleitmittel dient.

Nach dem Sortieren werden die die Kaltendvergütung aufweisenden Glashohlkörper mit einem lösungsmittelfreien, radikalisch und/oder kationisch polymerisierbaren Überzugsmittel beschichtet.

Als radikalisch polymerisierbare Überzugsmittel können übliche durch energiereiche Strahlung und besonders bevorzugt durch UV-Strahlung polymerisierbare bzw. härtbare Monomere, Oligomere und/oder Polymere verwendet werden. Derartige strahlenhärtbare Monomere, Oligomere und Polymere sind dem Fachmann geläufig. Sie werden allein oder im Gemisch eingesetzt, wobei darauf zu achten ist, daß sie eine derartige Viskosität aufweisen, daß eine Applikation im flüssigen Zustand ohne Lösungsmittelzusatz möglich ist. Die Applikation kann in üblicher Weise erfolgen, beispielsweise durch Walzen, Tauchen oder Filzen. Aufgrund der hohen Geschwindigkeiten ist jedoch der Spritzauftrag bevorzugt. Bevorzugt werden die Überzugsmittel-Zusammensetzungen so gewählt, daß eine für die Spritzapplikation geeignete Viskosität vorliegt, beispielsweise eine Viskosität von 15 bis 40, bevorzugt 16 bis 25 Sekunden bei Raumtemperatur, gemessen im Ford-Becher, DIN 4 mm.

Beispiele für radikalisch polymerisierbare Überzugsmittel, insbesondere durch UV-Strahlung härtbare Überzugsmittel, sind Monomere, Oligomere, Polymere, Copolymere oder Kombinationen davon, mit einer oder mehreren olefinischen Doppelbindungen, beispielsweise Acrylsäure- und Methacrylsäureester. Sie können monofunktionell, difunktionell, trifunktionell und mehrfunktionell sein. Beispiele sind Butyl(meth)acrylat, Dipropylenglykoldi(meth)acrylat, Tripropylenglykoldi(meth)acrylat, Trimethylolpropantri(meth)acrylat, Pentaerythritol-tetra(meth)acrylat. Beispiele für Oligomere sind (meth)acrylfunktionelle (Meth)Acrylcopolymere, Epoxidharz(meth)acrylate, wie Ethylenoxid/Propylenoxid-Trimethylolpropantriacrylat (beispielsweise mit einem Molekulargewicht von 480); Polyesterpolyole, funktionalisiert mit (Meth)Acrylsäure; Melamine, wie Hexamethoxymethylmelamin, partiell verethert mit Hydroxyalkyl(meth)acrylaten; Methane aus Polyolen, umgesetzt mit (insbesondere aliphatischen) Diisocyanat-Hydroxy(meth)acrylat-Addukten. Der hier und im Folgenden verwendete Ausdruck (Meth)Acrylat bedeutet Acrylate und/oder Methacrylate. Die Überzugsmittel können neben den radikalisch härtbaren Monomeren, Oligomeren und Polymeren auch in diesen lösliche Harze, beispielsweise Silikonharze, enthalten, die als solche keiner Strahlenhärtung unterliegen. Sie werden bei der Aushärtung der strahlenhärtbaren Anteile in den Überzug miteinbezogen. Besonders bevorzugt ist der Zusatz von Silikonharzen, insbesondere der Zusatz von Methyl-Phenyl-Silikonharzen, wie beispielsweise dem Handelsprodukt REN 60 des Herstellers Wacker-Chemie. Werden solche Harze gelöst in einem Lösemittel bereitgestellt, so wird das Lösemittel durch ein strahlenhärtbares Monomer, beispielsweise ein Di(meth)acrylat, wie Dipropylenglykoldiacrylat, ersetzt. Hierzu wird eine Lösung des Silikonharzes mit dem Acrylat versetzt, worauf das Lösemittel quantitativ abdestilliert wird.

Die für das erfindungsgemäße Verfahren einsetzbaren radikalisch polymerisierbaren Überzugsmittel können gemäß einer bevorzugten Ausführungsform auch Haftvermittler enthalten. Als Haftvermittler eignen sich beispielsweise organofunktionelle Silane, insbesondere Silane, die Glycidylgruppen enthalten. Besonders bevorzugte Beispiele sind 3-Glycidyloxypropyltrimethoxysilan und 3-Glycidyloxypropyltriethoxysilan, wobei letzteres besonders bevorzugt ist. Derartige Haftvermittler können beispielsweise in Mengen von 1 bis 10 Gew.%, bezogen auf die Überzugsmittelzusammensetzung, enthalten sein.

Da die erfindungsgemäß einsetzbaren Überzugsmittel durch Strahlen härtbar sein sollen, insbesondere durch UV-Strahlung, enthalten sie bevorzugt Photoinitiatoren. Derartige Photoinitiatoren können beispielsweise in Mengen von 2 bis 10 Gew.% enthalten sein. Als Photoinitiatoren sind übliche Photoinitiatoren geeignet, wie sie auf dem Gebiet der durch UV-Strahlung radikalisch härtbaren Überzugsmittelzusammensetzungen geläufig sind.

Beispiele für Photoinitiatoren, die erfindungsgemäß zur radikalischen Polymerisation eingesetzt werden können, und die auf dem Gebiet der durch energiereiche Strahlungen härtbaren Zusammensetzungen üblich sind, sind solche, die beispielsweise im Wellenlängenbereich von 190 bis 400 nm absorbieren. Beispiele hierfür sind übliche organische Peroxide und Azoverbindungen. Beispiele für Peroxide sind Di-t-butylperoxid, Dibenzoylperoxid, Peroxocarbonsäuren, wie Peroxoessigsäure, Peroxodicarbonate, wie Di-sec-butyl-peroxodicarbonat, Peroxidether, wie 2-Ethylhexansäure-tert-butylperester, Hydroperoxide, wie Cumolperoxid und Ketonperoxide, wie Methylethylketon-peroxid. Ein Beispiele für einen Azoinitiator ist das Azobisisobutyronitril. Weitere Beispiele für Photoinitiatoren sind chlorhaltige Initiatoren, wie chlorhaltige aromatische Verbindungen, z. B. beschrieben in US-A-4,089,815; aromatische Ketone, wie in US-A-4,318,791 oder EP-A-0 003 002 und EP-A-0 161 463 beschrieben; Hydroxyalkylphenone, wie in US-A-4,347,111 beschrieben; Phosphinoxide, wie in EP-A-0 007 086, 0 007 508 und 0 304 783 beschrieben; Initiatoren auf der Basis von Hydroxyalkylphenonen, wie in US-A-4,602,097 beschrieben, ungesättigte Initiatoren, wie OH-funktionelle aromatische Verbindungen, die beispielsweise mit Acrylsäure verestert wurden, wie in US-A-3,929,490, EP-A-0 143 201 und 0 341 560 beschrieben; oder Kombinationen derartiger Initiatoren, wie beispielsweise in US-A-4,017,652 beschrieben. Günstig werden auch Photoinitiatoren vom Acylphosphanoxidtyp und vom Bis-acylphosphanoxidtyp verwendet, wie sie beispielsweise in EP-A-0 413 657 beschrieben werden. Sie sind, gegebenenfalls in Kombination mit anderen Photoinitiatoren, wie beispielsweise vom Hydroxyalkylphenontyp, besonders für farbige Beschichtungen geeignet, die transparent bis deckend pigmentiert sind. Ein bevorzugtes Beispiel für Photoinitiatoren vom Hydroxyalkylphenontyp ist 1-Hydroxy-2-methyl-1-phenyl-propan-2-on.

Gemäß einer bevorzugten Ausführungsform betrifft die Erfindung radikalisch polymerisierbare Überzugsmittel, die insbesondere für die Beschichtung von Glas, z. B. Glashohlkörpern im On-line und Off-line Verfahren, z. B. für das erfindungsgemäße Verfahren verwendbar sind. Derartige bevorzugte Überzugsmittel enthalten
A) 1 bis 10 Gew.% eines oder mehrerer Silane, insbesondere glycidylgruppenhaltiger Silane als Haftvermittler, beispielsweise 3-Glycidyloxipropyltrimethoxysilan und bevorzugt 3-Glycidyloxipropyltriethoxysilan,
B) 1 bis 10 Gew.% eines oder mehrerer Phosphorsäure-monoester von Hydroxyalkyl(meth)acrylaten, wobei die Alkylgruppen bevorzugt 1 bis 4 Kohlenstoffatome enthalten und bevorzugt die Ethylgruppe darstellen,
C) 2 bis 10 Gew.% eines oder mehrerer Photoinitiatoren, wobei solche vom Typ der Hydroxyalkyl- oder Hydroxycycloalkyl-phenone bevorzugt sind; und
D) als Rest auf 100 Gew.% Di(meth)acrylate, Tri(meth)acrylate und/oder höherfunktionelle (Meth)Acrylate in Form von Monomeren, Oligomeren und/oder Polymeren, gegebenenfalls zusammen mit Mono(meth)acrylaten und/oder Silikonharzen,
   wobei sich die vorstehenden Komponenten A) bis D) auf 100 Gew.% addieren, sowie
E) zusätzlich gegebenenfalls übliche Lackadditive, Farbstoffe und/oder Pigmente.
   Die Mengenanteile von nieder- und höhermolekularen Komponenten werden dabei so gewählt, daß die Gesamtzusammensetzung Spritzviskosität aufweist.

Gemäß einer besonders bevorzugten Ausführungsform der Erfindung enthält das Überzugsmittel, neben den vorstehend angegebenen Komponenten A), B) und C) in den angegebenen Mengen, 5 bis 30 Gew.% eines oder mehrerer in den übrigen Komponenten gelöster, nicht-strahlenhärtbarer Silikonharze und als Rest auf 100 Gew.% ein oder mehrere Di-, Tri-, Tetra(meth)acrylate und/oder höherfunktioneller (Meth)Acrylate, wobei sich die vorstehenden Komponenten auf 100 Gew.% addieren, sowie gegebenenfalls zusätzlich E) lackübliche Additive, Farbstoffe und/oder Pigmente.

Bevorzugt weisen die nicht-strahlenhärtbaren Silikonharze reaktive Wasserstoffatome auf, wie beispielsweise Hydroxylgruppen.

Bei dem Silikonharz handelt es sich bevorzugt um ein Methylphenyl-Silikonharz, das im Handel erhältlich ist, beispielsweise unter der Handelsbezeichnung REN 60. Derartige Silikonharze liegen im allgemeinen in gelöster Form, beispielsweise gelöst in Xylol und/oder Toluol vor. Die Konzentration in der Lösung liegt im allgemeinen in der Größenordnung von etwa 60 Gew.%. Erfindungsgemäß wird das Lösungsmittel durch ein das Silikonharz lösendes ungesättigtes, radikalisch polymerisierbares Monomeres ersetzt, wie beispielsweise bevorzugt Dipropylenglykoldiacrylat. Dies kann durch Vermischen der Lösung mit Dipropylenglykoldiacrylat und Abdestillieren des Lösemittels erfolgen. So kann beispielsweise eine Lösung des Methylphenylsilikonharzes in Dipropylenglykoldiacrylat im Gewichtsverhältnis von etwa 60 : 40 bereitgestellt werden.

Gemäß der vorstehend genannten besonders bevorzugten Ausführungsform kann der Rest auf 100 Gew.% beispielsweise aus einem Ethylenoxid/Propylenoxid-Trimethylolpropan-Triacrylat (einem Oligomeren mit einem Molgewicht in der Größenordnung von 480), Tripropylenglykoldiacrylat, Dipropylenglykoldiacrylat, Trimethylolpropantriacrylat, Pentaerythritol-Tetraacrylat oder Gemischen davon bestehen.

Gemäß einer weiteren besonders bevorzugten Ausführungsform enthält das erfindungsgemäß einsetzbare Überzugsmittel neben den vorstehend genannten Komponenten A), B) und C) in den vorstehend angegebenen Mengenanteilen, 5 bis 40 Gew.% eines oder mehrerer Di(meth)acrylate, 5 bis 40 Gew.% eines oder mehrerer tri- und/oder mehrfunktioneller (Meth)Acrylate und 0 bis 20 Gew.% eines oder mehrerer Mono(meth)acrylate, sowie gegebenenfalls lackübliche Additive. Besonders bevorzugte Beispiele für bei dieser Ausführungsform verwendbare monofunktionelle Acrylate sind Isobornyl-, Phenoxyethyl-, Tetrahydrofuran-, Octyl-, Dicyclopentenyl- und Decylacrylat, die ganz oder teilweise auch durch andere Monomere, wie N-Vinylpyrrolidon, ersetzt sein können. Für diese Ausführungsform besonders bevorzugte Beispiele von Diacrylaten sind Hexandioldiacrylat, Dipropylenglykoldiacrylat, Tripropylenglykoldiacrylat, Bisphenol-A-diacrylat, sowie auch mit Phosphorsäure monoveresterte Hydroxyalkylacrylate. Für diese bevorzugte Ausführungsform besonders bevorzugte Beispiele für tri- und mehrfunktionelle Acrylate sind Trimethylolpropantriacrylat, Ethylenoxid/Propylenoxid-Trimethylolpropantriacrylat (Oligomer mit einem Molgewicht von etwa 480), Pentaerythritol-Tetraacrylat sowie mehrfunktionelle Phosphorsäureester von Hydroxyalkylacrylaten; Polyesteracrylate, bei denen es sich beispielsweise um gesättigte Polyester aus Gemischen mehrwertiger Polyalkohole und Dicarbonsäuren, wie Adipinsäure, handelt, die mit Acrylsäure funktionalisiert sind; acrylfunktionelle Melamine, wie Hexamethoxymethylmelamin, partiell verethert mit Hydroxyacrylaten; Umsetzungsprodukte von Hydroxyacrylaten mit Dicarbonsäureanhydriden, beispielsweise Gemischen von Dicarbonsäureanhydriden, wie Phthalsäureanhydrid, Tetrahydrophthalsäureanhydrid und/oder Bernsteinsäureanhydrid; cycloaliphatische und aliphatische Epoxidacrylate, gegebenenfalls im Gemisch; sowie Polyurethan-modifizierte Acrylate. Bei der Herstellung derartiger Überzugsmittel, die höhermolekulare Materialien enthalten, werden flüssige Monomere mit höherviskosen, höhermolekularen Anteilen in derartigen Mengen vermischt, daß Spritzapplikation erzielt wird, d. h., daß beispielsweise eine Viskosität von 15 - 40 Sekunden Auslaufzeit bei Raumtemperatur im DIN 4 mm Ford-Becher (Ford-Cup) erzielt wird.

Für das erfindungsgemäße Verfahren können außer lösungsmittelfreien, radikalisch polymerisierbaren Überzugsmitteln auch lösungsmittelfreie, kationisch polymerisierbare Überzugsmittel verwendet werden. Die Überzugsmittel können auch aus Gemischen von lösungsmittelfreien radikalisch und kationisch polymerisierbaren Überzugsmitteln bestehen.

Als kationisch polymerisierbare Überzugsmittel können lösungsmittelfreie Überzugsmittelzusammensetzungen verwendet werden, die durch energiereiche Strahlung und bevorzugt UV-Strahlung polymerisierbare Komponenten enthalten. Als Komponenten für derartige Überzugsmittel sind beispielsweise insbesondere solche geeignet, die ein Gemisch von Epoxidgruppen und Hydroxylgruppen enthaltenden Komponenten enthalten. Die Epoxidgruppen enthaltenden Verbindungen weisen mindestens zwei Epoxidgruppen pro Molekül auf, sie können jedoch auch drei oder mehrere Epoxidgruppen pro Molekül enthalten. In gleicher Weise sind die als Hydroxylgruppen verwendbaren Komponenten zumindest difunktionell; es können jedoch auch drei oder mehrere Hydroxylgruppen pro Molekül aufweisende Komponenten eingesetzt werden.

Bei den Epoxidgruppen und Hydroxylgruppen enthaltenden Komponenten kann es sich um monomere, oligomere oder polymere Verbindungen handeln. Die dabei eingesetzten Molekulargewichte spielen, wie auch bei den vorstehend erwähnten radikalisch polymerisierbaren Komponenten, keine Rolle; die Mischungen müssen lediglich so gewählt werden, daß pro Applikation, insbesondere zur Sprühapplikation geeignete Viskositäten des Gesamtgemischs erzielt werden.

Beispiele für verwendbare Di- und Polyepoxide sind solche auf der Basis von cycloaliphatischen Diepoxiden, wie 3,4-Epoxycyclohexylmethyl-3,4-epoxycyclohexancarboxylat, wie die Handelsprodukte Cyracure UVR 6110 der Union Carbide oder Degacure K 126 der Degussa.

Weitere Beispiele für Epoxidharze mit zwei oder mehreren Epoxidgruppen pro Molekül sind solche auf der Basis von Bisphenol A, wie die Handelsprodukte Epicote 828 der Shell AG, DER 331, der Dow und Beckopox EP 138 der Hoechst AG.

Es können auch niedermolekulare Monomere eingesetzt werden, beispielsweise Diglycidylether, wie Hexandioldiglycidylether oder Butandioldiglycidylether. Derartige Diglycidylether lassen sich insbesondere als Reaktivverdünner zur Auflösung höhermolekularer Produkte verwenden.

Als Polyolverbindungen lassen sich beispielsweise di- und trifuntionelle sowie mehrfunktionelle höher- und niedermolekulare Polyole einsetzen. Wobei derartige Polyole Homo- und Copolymerisate sein können, wie beispielsweise Polyetherpolyole oder Additionsprodukte von Polyolen an Diepoxide, beispielsweise die vorstehend als Beispiele genannten cycloaliphatischen Diepoxide. Spezielle Beispiele für verwendbare Homopolymerisate sind Polycaprolactonpolyole, di- und trifunktionell, wie das Handelsprodukt Tone 0301 der Union Carbide. Beispiele für Additionsprodukte sind solche aus Polyolen, wie die vorstehend genannten Polycaprolactonpolyole an Diepoxide, beispielsweise die vorstehend genannten alicyclischen Diepoxide, wie die Handelsprodukte Cyracure UVR 6379 und 6351. Durch die Wahl von höher- oder niedrigermolekularen Polyolen kann die Flexibilität der damit im Überzug reagierenden Epoxide beeinflußt werden; solche Polyole werden daher häufig als Flexibilizer bezeichnet.

In die erfindungsgemäß verwendbaren kationisch polymerisierbaren Überzugsmittel können auch Copolymere eingearbeitet werden, die üblicherweise durch Bestrahlung nicht härtbar sind, wie beispielsweise Copolymere auf der Basis von Styrol mit olefinischen Monomeren, wobei letztere auch funktionelle Gruppen enthalten können, wie Hydroxylgruppen; ein bevorzugtes Beispiel für olefinisch ungesättigte Comonomere ist der Allylalkohol. Bevorzugt läßt sich ein OH-funktionelles Copolymer aus Styrol-Allylalkohol mit einer OH-Zahl von 188 verwenden, wie beispielsweise das Handelsprodukt RJ 100 der Monsanto. Derartige Copolymere werden bei der Härtung des kationisch aushärtbaren Überzugsmittels in den gebildeten Überzug mit einbezogen.

Den erfindungsgemäß einsetzbaren durch Bestrahlung kationisch härtbaren Überzugsmitteln werden Photoinitiatoren zugesetzt, die für die kationische durch Strahlung angeregte Polymerisation üblich und dem Fachmann geläufig sind. Derartige Photoinitiatoren werden in üblichen Mengen eingesetzt. Beispiele sind Triarylsulfoniumsalze, wie Triarlysulfoniumhexafluorophosphat und Triarylsulfoniumhexafluoroantimonat; (η⁵-2,4-Cyclopentadien-1-yl)[(1,2,-3,4,5,6-η)-(1-methylethyl)benzol]-Eisen(1+)-hexafluorophosphat(1-).

Die Photoinitiatoren können allein oder im Gemisch eingesetzt werden.

Die erfindungsgemäß einsetzbaren kationisch polymerisierbaren Überzugsmittel können gemäß einer bevorzugten Ausführungsform auch Haftvermittler enthalten. Beispiele sind organofunktionelle Silane, wie sie bereits zum Einsatz in den radikalisch polymerisierbaren überzugsmitteln als Beispiele beschrieben wurden.

Die erfindungsgemäß eingesetzten Überzugsmittel auf der Basis radikalisch und/oder kationisch polymerisierbarer Bindemittel können mit lacküblichen Additiven versetzt sein, wie beispielsweise Slipadditiven (Gleitmitteln), Entschäumern, Verlaufsmitteln und/oder UV-Absorbern. Es handelt sich hierbei um handelsübliche, dem Fachmann geläufige, Produkte. Als Verlaufsmittel können beispielsweise Silikonöle eingesetzt werden. Die erfindungsgemäß eingesetzten Überzugsmittel können auch Pigmente und/oder Farbstoffe enthalten. Es kann sich hierbei beispielsweise um transparente Pigmente und/oder deckende Pigmente sowie transparente und/oder deckende Farbstoffe handeln.

Derartige Additive, Pigmente und/oder Farbstoffe werden in solchen Mengen zugesetzt, die die Strahlenhärtbarkeit der Überzugsmittel nicht nachteilig beeinflussen.

Gemäß einer bevorzugten Ausführungsform enthalten die erfindungsgemäß verwendbaren kationisch polymerisierbaren Überzugsmittel 10 bis 80 Gew.% eines oder mehrerer, mindestens zwei Epoxidgruppen pro Molekül enthaltenden Epoxidharzes auf der Basis cycloaliphatischer Diepoxide;
5 bis 50 Gew.% eines oder mehrerer flüssiger Polyole mit mindestens zwei Hydroxylgruppen im Molekül, als Flexibilizer;
5 bis 50 Gew.% eines oder mehrerer flüssiger Diglycidylether als Reaktivverdünner;
5 bis 30 Gew.% eines oder mehrerer Epoxidharze auf der Basis von Bisphenol A;
0 - 20 Gew.%, bevorzugt 1 bis 20 Gew.% eines oder mehrerer Copolymerer von Styrol mit α,β-olefinisch ungesättigten Monomeren, insbesondere Allylalkohol;
1 bis 5 Gew.% eines oder mehrerer Photoinitiatoren und
1 bis 5 Gew.% eines oder mehrerer Silane, bevorzugt glycidylgruppenhaltiger Silane,
wobei sich die vorstehenden Komponenten auf 100 Gew.% addieren. Dieser Zusammensetzung können lackübliche Additive, Farbstoffe und/oder Pigmente zugesetzt sein.

Beim erfindungsgemäßen Verfahren werden die, durch energiereiche Strahlung polymerisierbaren Überzugsmittel bevorzugt durch Spritzapplikation auf die mit dem Kaltendvergütungsmittel überzogenen Glashohlkörper aufgebracht. Die Schichtdicke beträgt mindestens 8 µm, bevorzugt mindestens 10 µm und besonders bevorzugt mindestens 15 µm, bezogen auf die nach dem Härten erzielte Trockenfilmstärke. Bevorzugt weisen die zu beschichtenden Glashohlkörper Temperaturen von beispielsweise 25 bis 70^{o}C, besonders bevorzugt von 50 bis 70^{o}C, auf. Falls derartige Temperaturen nach der Kaltendvergütung und dem Sortieren nicht mehr vorliegen, können die zu beschichtenden Glashohlkörper einer Vorerwärmung, beispielsweise mit einem Düsentrockner, unterzogen werden.

Der Spritzvorgang erfolgt beim erfindungsgemäßen Verfahren bevorzugt ohne Anwendung eines Schutzgases. Letzteres, beispielsweise Stickstoff, ist häufig bei bekannten Verfahren zur Erzielung dünner Schichtdicken notwendig.

Der Spritzvorgang erfolgt bevorzugt in einer abgekapselten und dadurch vor Staub geschützten Spritzvorrichtung, wobei das erhaltene Overspray bevorzugt rezyklisiert wird. Dies kann beispielsweise durch Auffangen des Oversprays in einer Naßberieselung, die aus dem Überzugsmittel besteht, erfolgen. Das aus der Kammer abgezogene Gemisch von Overspray und Überzugsmittel kann gegebenenfalls über einen Filter zur Naßberieselung und/oder zur Spritzeinrichtung zurückgeführt werden.

Die aus der Beschichtungszone, beispielsweise der Spritzkammer, austretenden beschichteten Glashohlkörper werden unmittelbar anschließend durch energiereiche Strahlung, beispielsweise UV-Strahlung, ausgehärtet. Dies kann in einer der Beschichtungszone nachgeschalteten Härtungszone, beispielsweise einer UV-Trockenkammer, erfolgen, wo die beschichteten Glashohlkörper an einer oder mehreren Bestrahlungseinrichtungen, wie UV-Strahlern, vorbeigeführt werden. Bevorzugt weisen derartige Strahler eine Leistung von 80 - 240 W pro cm (Strahlerlänge) auf.

Beim erfindungsgemäßen Verfahren werden die beschichteten Glashohlkörper nach der Härtung durch energiereiche Strahlung einer Wärmebehandlung unterzogen, die zu einer Nachhärtung, sowie zu einer weitgehenden Geruchsbeseitigung führt. Die Wärmebehandlung erfolgt durch Anblasen mit Heißluft von etwa 100 bis 400^{o}C, bevorzugt 200 bis 300^{o}C, während etwa 5 bis 30, bevorzugt 5 bis 10 Sekunden. Hierzu geeignet sind beispielsweise ein Umluftofen oder ein üblicher Düsentrockner.

Die aus der Härtungszone austretenden beschichteten Glashohlkörper, können nach der vorstehend beschriebenen Wärmebehandlung gegebenenfalls mit Kaltluft (etwa Raumtemperatur in der Größenordnung von 15 bis 25^{o}C) angeblasen werden, bis sie eine Temperatur von etwa 40^{o}C oder darunter erreicht haben. Durch dieses Anblasen wird es möglich, jegliche unerwünschten Gerüche zu beseitigen, so daß das beschichtete Material unmittelbar der Palettierung und gegebenenfalls Verpackung mit anschließendem Versand zugeführt werden kann.

Das erfindungsgemäße Verfahren wird bevorzugt mit einer Vorrichtung durchgeführt, die an die übliche Herstellung von Hohlglaskörpern, wie Flaschen, mit anschließender Kaltendvergütung direkt anschließt.

Das erfindungsgemäße Verfahren kann On-line im Anschluß an die Herstellung von Glashohlkörpern und deren Kaltendvergütung durchgeführt werden. Nach der Kaltendvergütung werden die Flaschen in üblicher Weise, beispielsweise mit einem Laufband, weitertransportiert, wobei sich die Flaschen in Kontakt miteinander befinden. Vor Durchführung der Beschichtung werden die Flaschen zunächst vereinzelt. Dies kann in üblicher Weise erfolgen, beispielsweise durch Aufnahme in einer Schnecke, die die Glashohlkörper voneinander separiert und anschließende Trennung mit einem Sternrad. Anschließend werden die Glashohlkörper, beispielsweise die Flaschen, bevorzugt am oberen offenen Ende von einer Greifvorrichtung aufgenommen, und nach unten hängend zur Spritzvorrichtung geführt.

Die Greifvorrichtung ist an den das Glas berührenden Teilen bevorzugt metallfrei aus einem hochtemperaturbeständigen Material ausgebildet, beispielsweise aus Teflon, Polyamiden und/oder Polyphenylensulfid. Bevorzugt wird der Greifer durch eine Schablone (Matritze) vor Spritznebeln geschützt. Die Schablone kann dabei so ausgebildet werden, daß sie einstellbar ist, um zu verhindern, daß Spritznebel in oder auf den Mündungsbereich der Glashohlkörper bzw. Flaschen gelangen. Die Greifvorrichtungen sind so ausgestaltet, daß die Glashohlkörper nach unten hängend in die Spritzzone eingeführt werden können. Beispielsweise können die Greifvorrichtungen an Kettenfördereinrichtungen montiert sein.

Vor der Einführung der Glashohlkörper in die Spritzzone kann eine Erwärmungsvorrichtung vorgesehen sein, beispielsweise ein Düsentrockner. Diese Erwärmungsvorrichtung dient dazu Glashohlkörper, die zu stark abgekühlt wurden, auf Temperaturen von 25 bis 70^{o}C, bevorzugt 50 bis 70^{o}C vor dem Einführen in die Spritzzone vorzuerwärmen.

Als Spritzzone dient bevorzugt eine abgekapselte Spritzkabine, um ein staubfreies Arbeiten gewährleisten zu können. Darüberhinaus ist die Spritzkabine bevorzugt so gestaltet, daß kein Tageslicht einfallen kann, um eine vorzeitige Polymerisation der durch UV-Strahlen härtbaren Beschichtungsmaterialien zu vermeiden. Dies ist besonders bevorzugt, wenn Overspray aufgefangen und rezyklisiert werden soll. Gegebenenfalls kann die Spritzkabine mit UV-freiem Licht, beispielsweise mit gelbem Licht, beleuchtet werden.

Die Lackier- bzw. Spritzkabine ist mit einer oder mehreren, bevorzugt etwa drei Spritzpistolen pro zu lackierendem Objekt ausgestattet, wobei es sich um mitlaufende Pistolen handelt. Es können auch stationäre Pistolen auf Hubschlitten vorgesehen sein. Bevorzugt erfolgt das Spritzverfahren durch Druckluft oder als Airless-Verfahren. Die Glashohlkörper können durch einen Friktionsantrieb beispielsweise mit 1 bis 10 Umdrehungen/Sek. gedreht werden, um eine gleichmäßige Lackierung sicherzustellen.

Die Lacktemperatur beim Spritzen bewegt sich beispielsweise bei 20 bis 50^{o}C.

Die Spritzkabinen sind gemäß einer bevorzugten Ausführungsform der Erfindung so ausgestaltet, daß eine Rezyklisierung des Oversprays des Beschichtungsmaterials möglich ist. Hierzu sind die Spritzkabinen und die Material berührenden Teile bevorzugt aus Edelstahl, damit keine Korrosion auftreten kann und das Beschichtungsmaterial nicht durch Metalleinflüsse polymerisiert wird. Zur Rezyklisierung des Oversprays ist die Spritzkabine mit einer Naßrieselzone, beispielsweise in Form der Kabinenrückwand, ausgestattet. Als Flüssigkeit zur Berieselung der Naßrieselzone und zur Naßabscheidung wird das zu versprühende Beschichtungsmaterial verwendet. Dieses kann über Ring- und Stichleitungen über eine oder mehrere Pumpen und gegebenenfalls durch Filter zusammen mit dem Overspray zur Naßrieselzone einerseits und zu den Spritzpistolen andererseits zurückgeführt werden. Auf diese Weise läßt sich die Bildung von Abfällen vermeiden und das eingesetzte lösemittelfreie Beschichtungsmaterial kann mit einem Wirkungsgrad nahe 100 % verarbeitet werden.

Die Naßrieselzone kann in üblicher Weise ausgestaltet sein. Beispielsweise kann die Kabine mit einem Wirbelwäscher ausgestattet oder mit einer Vorrichtung zur Verengung des Luftdurchtritts versehen, wodurch die Luftgeschwindigkeit erhöht wird, wie beispielsweise eine Venturi-Düse. Zusätzlich kann eine zentrifugale Abscheidung vorgesehen sein.

Gemäß einer bevorzugten Ausführungsform ist hinter dem Wirbelwäscher oder der Venturi-Vorrichtung eine zusätzliche Naßabscheidung installiert. Beispielsweise befinden sich hinter dem Wirbelwäscher oder der Venturi-Vorrichtung Einsätze mit Raschig-Ringen oder anderen Keramikkörpern sowie gegebenenfalls Einsätze aus zusätzlichen Edelstahl-Prallfiltergeweben, um eine vollständige Abscheidung des Beschichtungs- und Overspraymaterials aus der Abluft sicherzustellen.

Zusätzlich kann anschließend ein elektrostatisches Naßfilter bestehend aus Platten oder Stäben installiert werden, um den gesetzlichen Abluft-Erfordernissen zu genügen.

Das aus der Naßrieselzone der Spritzkabine erhaltene, Overspray enthaltende Überzugsmittel kann durch Ringleitungen zur Naßberieselung in die Spritzkabine sowie zur Versorgung der Spritzpistolen zurückgeführt werden. Die Ringleitungen sind hierzu mit Pumpen versehen. Bevorzugt sind auch Filter zwischengeschaltet, um Verunreinigungen zu entfernen. Gegebenenfalls kann das aus der Naßrieselzone erhaltene Beschichtungsmittel zunächst über einen Vorratsbehälter, gegebenenfalls auch zur Entgasung geführt werden. Die Entgasung kann im Vorratsbehälter beispielsweise über Ultraschall oder durch Ausrüstung als Unterdruckkammer oder durch Ablaufen des Mikroschaums über ein geheiztes Ablaufblech erfolgen.

Aus der Spritzzone werden die beschichteten Glashohlkörper der Strahlenhärtungsanlage, beispielsweise einem UV-Trockner, zugeführt. Um eine Strahlenabschirmung zu erzielen, kann die Führung über eine übliche Omega-Schleife oder Umlenkung erfolgen.

Die Bestrahlung erfolgt mit Strahlern mit Leistungen in der Größenordnung von 80 bis 240 W/cm, bevorzugt etwa 200 W/cm. Es können beispielsweise Quecksilber-Hochdruckstrahler, mikrowellengezündete Fusionssysteme oder Excimer Laser verwendet werden. Die beschichteten Glashohlkörper werden an mehreren Strahlern, beispielsweise 2 bis 3 Strahlern, vorbeigeführt, wobei weiterhin eine friktionsangetriebene Drehung um die eigene Achse erfolgt. Im wesentlichen wird die Produktionsgeschwindigkeit durch die Anzahl der Strahler bestimmt. Durch die Verwendung mehrerer Hochleistungsstrahler und die Drehung der Glashohlkörper läßt sich eine sehr kompakte Bauweise der Trocknungsanlage einhalten.

Eine Minimierung der Trocknerlänge kann dadurch erfolgen, daß die Strahler versetzt gegenüber gestellt werden, so daß jeweils verschiedene Bereiche der Glashohlkörper gleichzeitig bestrahlt werden können.

Die aus dem Trockner kommenden Glashohlkörper werden durch eine Hochtemperatur-Nachbehandlungszone geführt. In dieser kann beispielsweise kurzzeitig mit Heißluft angeblasen werden (es kann beispielsweise ein üblicher Düsentrockner oder Umluftofen eingesetzt werden). Die Lufttemperatur beträgt beispielsweise 100 bis 400 ^{o}C, bevorzugt 200 bis 400^{o}C, besonders bevorzugt 200 bis 300^{o}C und die Bespülung mit dieser Heißluft erfolgt beispielsweise während 5 bis 30 Sekunden, wobei die Glashohlkörper weiterhin gedreht werden können. Durch eine derartige Hochtemperatur-Nachbehandlung erfolgt eine Überhitzung des getrockneten Lackfilms, wodurch Bruchstücke, bestehend aus Photoinitiator-Komponenten und Zerfallsprodukten sowie Restmonomeren entfernt werden.

Anschließend können vor und/oder nach der Abnahmeeinrichtung Vorrichtungen zum Anblasen der Glashohlkörper mit Kaltluft (Raumtemperatur etwa 15 bis 25^{o}C) vorgeschrieben sein. Das Anblasen erfolgt solange, bis eine Temperatur der Glashohlkörper von 40 ^{o}C oder darunter erzielt wird. Durch dieses Anblasen werden restliche Gerüche von den Glashohlkörpern entfernt, so daß diese unmittelbar zur Palettierung, Verpackung und zum Versand weitergeleitet werden können.

Das Absetzen der Glashohlkörper von der Greifvorrichtung erfolgt beispielsweise mit einem Stern auf Single-Liner, beispielsweise vor dem Anblasen mit Kaltluft.

Nach der Beschichtungsanlage (vor der Trocknungsanlage), unmittelbar nach der Trocknungsanlage (vor der Heißluftbehandlungszone, oder nach der Heißluftbehandlungszone) können Auswurfvorrichtungen vorgesehen sein, die entweder fehlerhaft beschichtete Glashohlkörper am Eintreten in die Trocknerzone hindern, oder verhindern, daß nicht getrocknete oder unzureichend getrocknete Glashohlkörper in den Abnahmeestern gelangen und dort zu Verunreinigungen führen.

In der beigefügten Figur wird ein Beispiel für eine bevorzugte Ausführungsform der erfindungsgemäßen Vorrichtung dargestellt.

In der Figur stellt 1 den Einlauf (Aufgabe), beispielsweise ein Laufband, kommend von der Glashohlkörperherstellung und Kaltendvergütung, dar. 2 bedeutet eine Abzweigung, die zu einer zweiten Beschichtungsvorrichtung gleicher Bauweise führt. Aus Sicherheitsgründen ist es erfindungsgemäß bevorzugt, das Beschichtungs- und Härtungsverfahren im Tandem-Betrieb T durchzuführen. Über den Einlauf 1 werden die Glashohlkörper in ein abgekapseltes System eingeführt und über eine Schnecke 3 und einen Stern 4 hängend mit der Öffnung nach oben in die Lackierkabine (Spritzkabine) 5 eingeführt. Die Beschichtung erfolgt an der Spritzstelle 6 mittels Spritzpistolen. Die Lackierkabine ist vorzugsweise mit einer Naßrieselzone 7 ausgestattet, die mit dem Beschichtungsmittel bespült wird. Dieses wird zur Naßberieselung und zu den Spritzpistolen rezyklisiert. Das zur Naßberieselung eingesetzte, Overspray enthaltende Beschichtungsmittel wird am Boden der Kabine gesammelt und die Abluft wird über eine Wirbelzone oder Venturi-Düse in eine hinter der Lackierkabine liegende Kabine eingeführt und dort durch in der Figur nicht dargestellte Filtereinsätze aus Raschig-Ringen und gegebenenfalls Filtergewebeeinlagen aus Edelstahl über einen Absaugventilator 8 abgezogen.

Die beschichteten Glashohlkörper werden weiter in hängender Weise über eine Umlenkung 9, die als Strahlenschutz dient, in den UV-Trockner 10 eingeführt und dort an mehreren UV-Strahlern 11 vorbeigeführt. Die aus dem UV-Trockner austretenden Glashohlkörper werden durch eine Hochtemperatur-Nachbehandlungsanlage 12, bei der es sich beispielsweise um ein Hochtemperaturgebläse handelt, geführt, und über einen Stern 13 auf einem Single-Liner 14 (Abnahme) abgesetzt, wo eine Nachbehandlung mit Kaltluft 15 erfolgen kann. Die Nachbehandlung mit Kaltluft kann auch schon unmittelbar im Anschluß an die Hochtemperaturbehandlung, z. B. vor dem Stern 13 erfolgen. Über den Auslauf 16 werden die Glashohlkörper aus dem geschlossenen System zur Palettierung, Verpackung und zum Versand weitergeführt. An den mit A gekennzeichneten Stellen der Figur können Abwurfvorrichtungen vorgesehen sein, die unvollständig oder schlecht beschichtete Glashohlkörper bzw. unvollständig oder nicht-getrocknete Glashohlkörper abwerfen. Derartige Vorrichtungen können durch übliche Fehlererfassungssysteme gesteuert werden.

Durch die vorliegende Erfindung wird ein Verfahren bereitgestellt, das die Beschichtung von Glashohlkörpern, insbesondere Flaschen, im Online-

Verfahren unmittelbar anschließend an die Glas- bzw. Glashohlkörper-Herstellung in der Praxis ermöglicht. Durch das Verfahren werden Glas/Kunststoff-Verbundwerkstoffe bereitgestellt, die einen hervorragenden Oberflächenschutz von Glashohlkörpern ergeben. Gefährdungen, die sich durch Oberflächenbeschädigungen von Glashohlkörpern, insbesondere Flaschen mit relativ hohem Innendruck, ergeben, werden somit vermieden. Auch wird es möglich dekorative Überzüge, wie verschiedenste Farbtöne reproduzierbar herzustellen. Durch die erfindungsgemäße Verfahrensweise wird eine hohe Produktionsgeschwindigkeit ermöglicht, die beispielsweise bei 200 bis 300 Flaschen pro Minute liegt. Das erfindungsgemäße Verfahren kann mit Vorrichtungen kompakter Bauweise durchgeführt werden, die keine großen räumlichen Anforderungen stellen. Das Verfahren läßt sich umweltfreundlich ohne Lösungsmittelemission durchführen und ist auch nicht an die Bereitstellung von Schutzgasen, wie Stickstoff, gebunden. Durch den Einsatz lösemittelfreier Beschichtungssysteme ist eine Rezyklisierung des Beschichtungsmaterials beim Spritzverfahren möglich, so daß ein hoher Wirkungsgrad erzielt wird. Man erhält geruchfreie Glashohlkörper, deren Innenraum frei von Kontaminierungen ist. Dies ist besonders wichtig bei der Herstellung von Getränkeflaschen. Besonders günstig läßt sich das erfindungsgemäße Verfahren auf Flaschen anwenden, die Getränke mit hohem Kohlendioxidgehalt aufnehmen sollen, wie beispielsweise Limonaden-und Sektflaschen. Die Umweltfreundlichkeit des erfindungsgemäßen Verfahrens wird auch dadurch gesteigert, daß gemäß einer bevorzugten Ausführungsform spezielle Kaltendvergütungsmittel eingesetzt werden, die vor der Beschichtung nicht entfernt werden müssen.

Die nachstehenden Beispiele dienen zur Erläuterung von erfindungsgemäß bevorzugt einsetzbaren Beschichtungsmittelzusammensetzungen.

Herstellung von lösemittelfreien Beschichtungsmittelzusammensetzungen mit einem Gehalt von durch Strahlen nicht härtbaren Silikonharzen:
Die in den Beispielen 1 und 2 verwendeten Silikonharze sind handelsübliche Methyl-Phenyl-Silikonharze (Handelsprodukt REN 60), die als 60%ige Lösung in Xylol/Toluol erhältlich sind. Um lösemittelfreie Bindemittel zu erhalten, wurden die Lösungen mit Dipropylenglykoldiacrylat versetzt und das Lösemittelgemisch (Xylol/Toluol) wurde qualitativ abdestilliert, so daß eine Lösung von Methyl-Phenyl-Silanharz von Dipropylenglykoldiacrylat vom Gewichtsverhältnis 60 : 40 entstand.

### Beispiel 1

Folgende Komponenten wurden zur Herstellung eines radikalisch polymerisierbaren, klaren Überzugsmittels miteinander vermischt:

| | |
|---|---|
| Monoester von Hydroxyethylacrylat mit Phosphorsäure | 1,0 Gew.% |
| 3-Glycidyloxypropyltrimethoxysilan | 3,0 Gew.% |
| Photoinitiator: 1-Hydroxy-cyclohexy-phenylketon | 4,0 Gew.% |
| Methyl-Phenyl-Silikonharz | 10,0 Gew.% |
| Dipropylenglykoldiacrylat | 32,0 Gew.% |
| Tripropylenglykoldiacrylat | 27,0 Gew.% |
| Ethylenoxid/Propylenoxid-Trimethylolpropantriacrylat (Oligotriacrylat, Molekulargewicht 480) | 15,0 Gew.% |
| Pentaerythritol-Tetraacrylat | 7,0 Gew.% |
| üblicher Entschäumer | 0,5 Gew.% |
| Silikonöl | 0,5 Gew.% |

### Beispiel 2

### Herstellung eines radikalisch polymerisierbaren, weißen Überzugsmittels

Folgende Bestandteile wurden miteinander vermischt:

| | |
|---|---|
| Monoester von Hydroxyethylacrylat mit Phosphorsäure | 2,0 Gew.% |
| γ-Glycidyloxypropyl-Triethoxysilan | 4,0 Gew.% |
| Benzophenon | 0,5 Gew.% |
| Photoinitiator: 2-Hydroxy-2-methyl-1-phenyl-propan-1-on | 2,5 Gew.% |
| Photoinitiator: Diphenyl-2,4,6-trimethyl-benzoyl-phospanoxid | 3,0 Gew.% |
| Methyl-Phenyl-Silikonharz | 15,0 Gew.% |
| Dipropylenglykoldiacrylat | 30,0 Gew.% |
| Ethylenoxid-Propylenoxid-Trimethylolpropan-Triacrylat | |
| (Oligotriacrylat, Molekulargewicht 480) | 25,0 Gew.% |
| Titandioxid | 16,0 Gew.% |
| Silikonöl | 2,0 Gew.% |

Die folgenden Beispiele 3 bis 5 beschreiben die Verwendung von tri- und/oder mehrfunktionellen (Meth)Acrylaten:

### Beispiel 3

### Herstellung eines radikalisch polymerisierbaren, roten Überzugsmittels

Folgende Bestandteile wurden miteinander vermischt:

| | |
|---|---|
| 3-Glycidyloxypropyltrimethoxysilan | 5,0 Gew.% |
| Monoester von Hydroxyethylacrylat mit Phosphorsäure | 5,0 Gew.% |
| Photoinitiator: 1-Hydroxy-cyclohexyl-phenylketon | 2,0 Gew.% |
| Photoinitiator: Benzophenon | 3,0 Gew.% |
| Hexandioldiacrylat | 20,0 Gew.% |
| Umsetzungsprodukt von Hydroxyacrylaten mit einem Gemisch aus Dicarbonsäureanhydriden (Phthalsäureanhydrid, Tetrahydrophthalsäureanhydrid, Bernsteinsäureanhydrid) | 44,0 Gew.% |
| Tripropylenglykoldiacrylat | 12,0 Gew.% |
| gesättigter Polyester aus einem Gemisch mehrwertiger Polyalkohole und Adipinsäure, funktionalisiert mit Acrylsäure | 5,0 Gew.% |

### Beispiel 4

### Herstellung eines radikalisch polymerisierbaren, schwarzen Überzugsmittels

Folgende Bestandteile wurden miteinander vermischt:

| | |
|---|---|
| γ-Glycidyloxypropyl-triethoxysilan | 3,0 Gew.% |
| Monoester von Hydroxyethylacrylat mit Phosphorsäure | 7,0 Gew.% |
| Photoinitiator: 2-Hydroxy-2-methyl-1-phenylpropan-1-on | 4,0 Gew.% |
| gesättigter Polyester aus einem Gemisch mehrwertiger Polyalkohole und Adipinsäure, funktionalisiert mit Acrylsäure | 22,0 Gew.% |
| Hexamethoxymethylamin, partiell verethert mit Hydroxyacrylaten | 10,0 Gew.% |
| Hexandioldiacrylat | 14,0 Gew.% |
| Trimethylolpropantriacrylat | 20,0 Gew.% |
| Mischung von cycloaliphatischen und aliphatischen Epoxidacrylaten, monomerenfrei | 15,0 Gew.% |
| Slipmittel (Silikonöl) | 1,0 Gew.% |
| Ruß | 4,0 Gew.% |

### Beispiel 5

### Herstellung eines radikalisch polymerisierbaren, farblosen Überzugsmittels

Folgende Bestandteile wurden miteinander vermischt:

| | |
|---|---|
| Umsetzungsprodukt von Hydroxyacrylaten mit einem Gemisch von Dicarbonsäureanhydriden (Phthalsäureanhydrid, Tetrahydrophthalsäureanhydrid, Bernsteinsäureanhydrid) | 35,0 Gew.% |
| 3-Glycidyloxypropyltrimethoxysilan | 5,0 Gew.% |
| Monoester von Hydroxyethylacrylat mit Phosphorsäure | 7,0 Gew.% |
| Photoinitiator: 1-Hydroxy-cyclohexyl-phenylketon | 5,0 Gew.% |
| urethanisiertes Polyacrylat, Gemisch mehrwertiger Polyalkohole, umgesetzt mit aliphatischen Diisocyanat-Hydroxyacrylat-Addukten | 20,0 Gew.% |
| Dipropylenglykoldiacrylat | 8,0 Gew.% |
| Trimethyololpropantriacrylat | 15,0 Gew.% |
| Silikonöl (Slipmittel) | 2,0 Gew.% |
| silikonmodifiziertes Acrylat (Slipmittel) | 3,0 Gew.% |

### Beispiel 6

### Herstellung eines kationisch polymerisierbaren, blauen Überzugsmittels

Folgende Bestandteile wurden miteinander vermischt:

| | |
|---|---|
| 2 Epoxidgruppen pro Molekül enthaltendes Epoxidharz auf der Basis von 3,4-Epoxycyclohexylmethyl-3,4-epoxycyclohexancarboxylat | 50,0 Gew.% |
| Additionsprodukt von Polycaprolactonpolyol an 3,4-Epoxycyclohexalmethyl-3,4-epoxycyclohexancarboxylat | 20,0 Gew.% |
| Hexandioldiglycidylether | 20,0 Gew.% |
| 3-Glycidyloxypropyltrimethoxysilan | 5,0 Gew.% |
| Triarylsulfoniumhexafluorophosphat (Photoinitiator) | 3,0 Gew.% |
| Slipadditive | 1,0 Gew.% |
| Zapponblau | 1,0 Gew.% |

### Beispiel 7

### Herstellung eines radikalisch polymerisierbaren, farblosen Überzugsmittels

Folgende Bestandteile wurden miteinander vermischt:

| | |
|---|---|
| 2 Epoxidgruppen pro Molekül enthaltendes Epoxidharz auf der Basis von 3,4-Epoxycyclehexylmethyl-3,4-epoxycyclohexancarboxylat | 40,0 Gew.% |
| Epoxidharz auf der Basis von Bisphenol A (Epicote 828) | 20,0 Gew.% |
| Butandioldiglycidylether | 26,0 Gew.% |
| OH-funktionelles Copolymeres auf der Basis von Styrol-Allylalkohol, OH-Zahl 188 | 10,0 Gew.% |
| 3-Glycidyloxypropyltrimethoxysilan | 1,0 Gew.% |
| Triarylsulfoniumhexafluorophosphat (Photoinitiator) | 3,0 Gew.% |

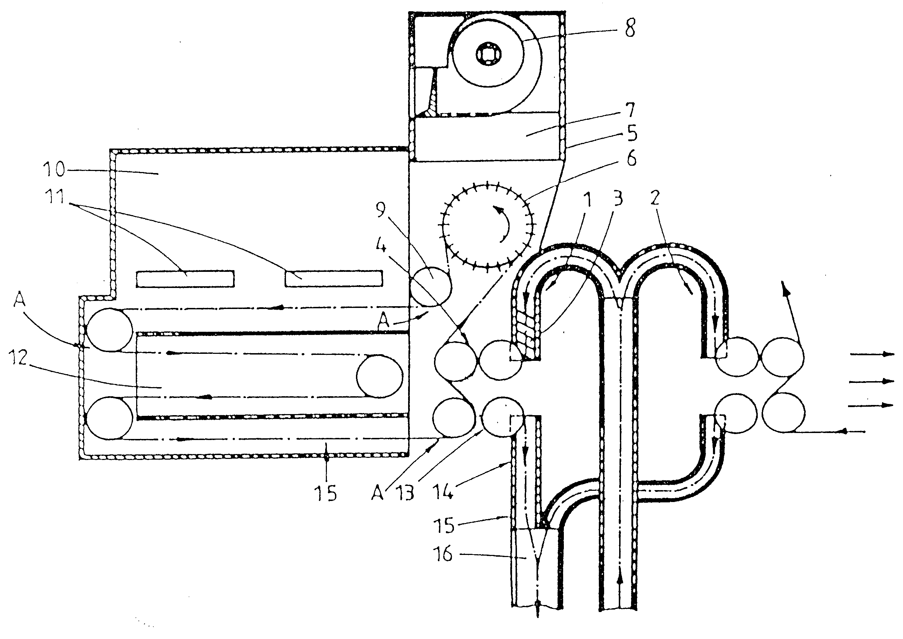

Die vorstehend in den Beispielen 1 bis 7 als Beispiele beschriebenen Überzugsmittel wurden in einer Vorrichtung, wie sie in Figur 1 beschrieben wird, zur Beschichtung von Glasflaschen verwendet. Man erhielt geruchfreie voll ausgehärtete farbige und klare Flaschen.

## Patentansprüche

1. Verfahren zur Herstellung von beschichteten Glashohlkörpern, durch Auftrag eines radikalisch polymerisierbaren Überzugsmittels und anschließende Härtung des gebildeten Überzugs mit energiereicher Strahlung, dadurch gekennzeichnet, daß es on-line durchgeführt wird, wobei die aus einer Glasschmelze erstellten Glashohlkörper einer Kaltendvergütung unterzogen, sortiert und unmittelbar anschließend mit einem lösungsmittelfreien, radikalisch und/oder kationisch polymerisierbaren Überzugsmittel in einer Schichtdicke von mindestens 8 µm beschichtet werden, worauf der gebildete Überzug durch energiereiche Strahlung gehärtet und anschließend mit Luft angeblasen wird.

2. Verfahren nach Anspruch 1, dadurch gekennzeichnet, daß das Anblasen mit Luft von Raumtemperatur erfolgt.

3. Verfahren nach Anspruch 1, dadurch gekennzeichnet, daß das Anblasen zunächst mit Heißluft von 100 bis 400^{o}C und anschließend mit Luft von Raumtemperatur bis zur Abkühlung der Glashohlkörper auf eine Temperatur von 40^{o}C oder darunter, erfolgt.

4. Verfahren nach einem der vorhergehenden Ansprüche, dadurch gekennzeichnet, daß vor der Kaltendvergütung eine Heißendvergütung der Glashohlkörper erfolgt.

5. Verfahren nach einem der vorhergehenden Ansprüche, dadurch gekennzeichnet, daß das Aufbringen und Härten des Überzugsmittels ohne Schutzgasatmosphäre erfolgt.

6. Verfahren nach einem der vorhergehenden Ansprüche, dadurch gekennzeichnet, daß das Überzugsmittel durch Spritzapplikation unter Rezyklisieren des Oversprays aufgebracht wird.

7. Verfahren nach Anspruch 6, dadurch gekennzeichnet, daß die Spritzapplikation in Edelstahlspritzkabinen erfolgt und daß das Overspray in dem lösungsmittelfreien Überzugsmittel aufgefangen und rezyklisiert wird.

8. Verfahren nach einem der vorhergehenden Ansprüche, dadurch gekennzeichnet, daß als Kaltendvergütungsmittel eines auf der Basis von Polyethylenglykolfettsäureestern verwendet wird.

9. Verfahren nach Anspruch 8, dadurch gekennzeichnet, daß ein Kaltendvergütungsmittel auf der Basis von Polyethylenglykolfettsäureestern verwendet wird, das zusätzlich ein oder mehrere Silane enthält.

10. Verfahren nach Anspruch 9, dadurch gekennzeichnet, daß als Silane glycidylgruppenhaltige Silane verwendet werden.

11. Verfahren nach einem der vorhergehenden Ansprüche, dadurch gekennzeichnet, daß als energiereiche Strahlung zur Härtung UV-Strahlung eingesetzt wird.

12. Verfahren nach einem der vorhergehenden Ansprüche, dadurch gekennzeichnet, daß als Glashohlkörper Flaschen beschichtet werden.

13. Strahlenhärtbares` lösungsmittelfreies radikalisch polymerisierbares Überzugsmittel, geeignet für die Beschichtung von Glashohlkörpern, enthaltend
A) 1 bis 10 Gew.% eines oder mehrerer Silane,
B) 1 bis 10 Gew.% eines oder mehrerer Phosphorsäure-monoester von Hydroxylalkyl(meth)acrylaten,
C) 2 bis 10 Gew.% eines oder mehrerer Photoinitiatoren und
D) als Rest auf 100 Gew.%, Di(meth)acrylate, Tri(meth)acrylate und/oder höherfunktionelle (Meth)Acrylate in Form von Monomeren, Oligomeren und/oder Polymeren oder Gemische davon, gegebenenfalls zusammen mit Monoacrylaten und/oder Siliconharzen, sowie
E) gegebenenfalls zusätzlich übliche Lackadditive, Farbstoffe und/oder Pigmente,
wobei die Mengenanteile von niedriger- und höhermolekularen Anteilen so gewählt werden, daß die Gesamtzusammensetzung Spritzviskosität aufweist.

14. Überzugsmittel nach Anspruch 13, enthaltend neben 1 bis 10 Gew.% der Komponente A), 1 bis 10 Gew.% der Komponente B) und 2 bis 10 Gew.% der Komponente C)
5 bis 30 Gew.% eines oder mehrerer in den übrigen Komponenten gelöster nicht-strahlenhärtbarer Silikonharze und als Rest auf 100 Gew.% die Komponente D), sowie E) gegebenenfalls übliche Lackadditive, Farbstoffe und/oder Pigmente.

15. Überzugsmittel nach Anspruch 13, enthaltend neben 1 bis 10 Gew.% der Komponente A), 1 bis 10 Gew.% der Komponente B) und 2 bis 10 Gew.% der Komponente C)
5 bis 40 Gew.% eines oder mehrerer Di(meth)acrylate,
5 bis 40 Gew.% eines oder mehrerer tri- und/oder mehrfunktioneller (Meth)Acrylate und
0 bis 20 Gew.% eines oder mehrerer Mono(meth)acrylate,
wobei sich die vorstehenden Komponenten auf 100 Gew.% addieren, sowie E) gegebenenfalls übliche Lackadditive, Farbstoffe und/oder Pigmente.

16. Strahlenhärtbares, lösungsmittelfreies kationisch polymerisierbares Überzugsmittel, geeignet für die Beschichtung von Glashohlkörpern, enthaltend
10 - 80 Gew.% eines oder mehrere mindestens zwei Epoxidgruppen pro Molekül enthaltende Epoxidharze auf der Basis cycloaliphatischer Diepoxide;
5 - 50 Gew.% eines oder mehrere flüssige Polyole mit mindestens zwei OH-Gruppen pro Molekül, als Weichmacher;
5 - 50 Gew.% eines oder mehrere flüssige Diglycidylether als Reaktivverdünner;
5 - 30 Gew.% eines oder mehrere Epoxidharze auf der Basis von Bisphenol A;
1 - 20 Gew.% eines oder mehrere Copolymere von Styrol mit ,β-olefinisch ungesättigten Monomeren,
1 - 5 Gew.% eines oder mehrere Photoinitiatoren und
1 - 5 Gew.% eines oder mehrere Silane,
wobei sich die vorstehenden Komponenten auf 100 Gew.% addieren und das Überzugsmittel zusätzlich übliche Lackadditive, Farbstoffe und/oder Pigmente enthalten kann.

17. Verfahren nach einem der Ansprüche 1 bis 12, dadurch gekennzeichnet, daß es mit einem Überzugsmittel nach einem der Ansprüche 13 bis 16 durchgeführt wird.

18. Verwendung der Überzugsmittel nach einem der Ansprüche 13 bis 16 zur Beschichtung von Glashohlkörpern, insbesondere von Flaschen.

19. Vorrichtung zur Beschichtung einseitig offener Glashohlkörper, geeignet zur Durchführung des Verfahrens nach einem der Ansprüche 1 bis 12, mit Einrichtungen zum Schmelzen von Glas, Herstellen von Glashohlkörpern, Heißendvergüten, Abkühlen, Kaltendvergüten und Sortieren der erhaltenen Glashohlkörper, dadurch gekennzeichnet, daß sie in Reihe nacheinander geschaltet, unmittelbar anschließend an die Sortiereinrichtungen, Einrichtungen zur Aufnahme der Glashohlkörper an ihrem offenen Ende und zum Führen der Glashohlkörper in hängender Weise mit ihrer Öffnung nach oben, eine abgekapselte Spritzkammer aus Edelstahl mit Einrichtungen zum Rezyklisieren von Overspray, eine abgekapselte UV-Trockenkammer, Einrichtungen zur Hochtemperatur-Nachbehandlung und anschließend Einrichtungen zur Abnahme der Glashohlkörper aufweist, wobei zwischen die abgekapselte UV-Trockenkammer und die Einrichtungen zur Abnahme der Glashohlkörper oder nach der Einrichtung zur Abnahme der Glashohlkörper, Einrichtungen zum Anblasen mit Kaltluft eingeschaltet sein können.

20. Vorrichtung nach Anspruch 19, dadurch gekennzeichnet, daß sie vor den Einrichtungen zur Abnahme der Glashohlkörper und/oder zwischen der Spritzkammer und der UV-Trockenkammer und/oder zwischen der UV-Trockenkammer und den Einrichtungen zur Hochtemperatur-Nachbehandlung Einrichtungen zum direkten Auswurf der Glashohlkörper von den Einrichtungen zu deren Aufnahme und Führen aufweist.

21. Vorrichtung nach Anspruch 19 oder 20, dadurch gekennzeichnet, daß die Spritzkabine eine Naßrieselzone zur Naßabscheidung von Overspray aufweist, die durch eine mit Pumpe und gegebenenfalls Filter ausgestattete Umlaufleitung für Überzugsmittel bespeist wird.

22. Vorrichtung nach Anspruch 21, dadurch gekennzeichnet, daß die Spritzkabine mit einer zweiten mit Pumpe und gegebenenfalls Filter ausgestatteten Umlaufleitung für Überzugsmittel, zur Rückführung zur Spritzeinrichtung, ausgestattet ist.

23. Vorrichtung nach einem der Ansprüche 19 bis 22, dadurch gekennzeichnet, daß die Einrichtung zur Hochtemperatur-Nachbehandlung ein Heißluftgebläse ist.
